# EUROPÄISCHE PATENTSCHRIFT

(11) **EP 4 067 119 B1**
(45) Veröffentlichungstag und Bekanntmachung des Hinweises auf die Patenterteilung: **20.03.2024**
(21) Anmeldenummer: 21208531.0
(22) Anmeldetag: 16.11.2021
(51) Int. Cl.: B60C 11/24

(54) **VERFAHREN ZUR BESTIMMUNG EINES ABRIEBS EINES REIFENS**
METHOD TO DETERMINE TYRE WEAR
PROCÉDÉ DE DÉTERMINATION D'UNE ABRASION D'UN PNEU

(30) Priorität: 30.03.2021 DE 102021203191
(43) Veröffentlichungstag der Anmeldung: 05.10.2022
(73) Patentinhaber: Continental Reifen Deutschland GmbH, 30175 Hannover (DE)
(72) Erfinder: Gläser, Frank, 30165 Hannover (DE); Sahlmüller, Baldo, 30165 Hannover (DE)
(74) Vertreter: Continental Corporation

(56) Entgegenhaltungen:
- EP-A1- 3 318 422
- EP-A1- 3 789 215
- WO-A1-2017/149954
- WO-A1-2020/031022
- DE-A1-102012 108 348
- DE-A1-102014 214 465
- US-A1- 2011 118 989
- US-A1- 2015 090 023
- US-A1- 2016 280 014
- US-A1- 2018 079 262

## Beschreibung

Die Erfindung betrifft ein Verfahren zur Bestimmung eines Abriebs eines Reifens an einem Fahrzeug.

Die Erfindung geht aus von einem Verfahren zur Bestimmung eines Abriebs eines Reifens an einem Fahrzeug. Dabei weist das Verfahren die folgenden Schritte auf:
- Bereitstellen eines Reifens, wobei der Reifen einen Radialbeschleunigungssensor aufweist, wobei der Radialbeschleunigungssensor zur Erfassung einer Radialbeschleunigung des Reifens vorgesehen ist;
- Erfassen einer Radialbeschleunigung des Reifens mittels des Radialbeschleunigungssensors;
- Bereitstellen einer ersten Verarbeitungsvorrichtung, wobei die erste Verarbeitungsvorrichtung zur Verarbeitung der mittels des Radialbeschleunigungssensors erfassten Radialbeschleunigung vorgesehen ist;
- Bestimmen einer Profiltiefe des Reifens mittels der ersten Verarbeitungsvorrichtung in Abhängigkeit der Radialbeschleunigung;
- Bestimmen eines sensorisch ermittelten Reifenabriebs mittels der ersten Verarbeitungsvorrichtung in Abhängigkeit der Profiltiefe des Reifens;
- Bereitstellen einer Sensorik am Fahrzeug zur Messung von Fahrdynamikparametern zur jeweiligen Messzeitpunkten;
- Bereitstellen einer zweiten Verarbeitungsvorrichtung, wobei den Fahrdynamikparametern Reibungsenergien mittels der zweiten Verarbeitungsvorrichtung zugeordnet werden;
- Zuordnen der Reibungsenergien zu den jeweiligen Messzeitpunkten mittels der zweiten Verarbeitungsvorrichtung;
- Bereitstellen einer dritten Verarbeitungsvorrichtung und Zusammenfassen von Reibungsenergien für gemessene Fahrtstrecken zu einer Gesamtreibungsenergie mittels der dritten Verarbeitungsvorrichtung;
- Bestimmen eines theoretisch ermittelten Reifenabriebs mittels der dritten Verarbeitungsvorrichtung in Abhängigkeit der Gesamtreibungsenergie.

Bei den Fahrtstrecken handelt es sich um Fahrstrecken des Fahrzeugs, an dem der Reifen verwendet wird.

Mittels der zweiten Verarbeitungsvorrichtung wird ein modellbasiertes Verfahren zur Bestimmung des Reifenabriebs durchgeführt.

Aus dem Stand der Technik ist es beispielsweise bekannt, eine Veränderung einer Profiltiefe von Reifen mit Sensoren zu messen. Ferner ist es aus dem Stand der Technik bekannt, Fahrdynamikparameter zu erfassen und in Abhängigkeit der Fahrdynamikparameter Reibungsenergien zu bestimmen, wobei in Abhängigkeit dieser bestimmten Reibungsenergien ein Reifenabrieb bestimmt werden kann.

Insbesondere bei den auf einer sensorischen Messung beruhenden Verfahren zur Bestimmung eines Reifenabriebs könnte kein korrekter Wert des Reifenabriebs bestimmt werden. Hintergrund ist, dass ein Reifenabriebssensor nur an einer bestimmten Stelle des Reifens angeordnet ist.

Verfahren und Vorrichtungen zur Bestimmung von Abrieben von Reifen sind beispielsweise aus der EP 3 789 215 A1, der DE 10 2012 108 348 A1, der DE 10 2014 214 465 A1, der US 2011/118989 A1, der US 2018/079262 A1, der US 2015/090023 A1 und der EP 3 318 422 A1 bekannt.

Für den Fall, dass der Reifen keinem gleichmäßigen Abrieb unterläge, könnte der ermittelte Abrieb, für die von dem Sensor überwachten Stelle, nicht auf den gesamten Reifen übertragen werden. Darüber hinaus könnten sensorbasierte Verfahren, wie beispielsweise eine Auswertung auf Basis einer Radialbeschleunigung, grundsätzlich relativ hohe Toleranzen in ihren Ergebnissen aufweisen.

Der Erfindung liegt daher die Aufgabe zugrunde, insbesondere die Ergebnisse einer sensorbasierten Bestimmung einer Profiltiefe zu verbessern und den Umstand zu erkennen, ob ein Reifen gegebenenfalls ungleichmäßig abgerieben worden ist.

Gelöst wird die erfindungsgemäße Aufgabe dadurch, dass das Verfahren die folgenden weiteren Schritte aufweist:
- Vergleichen des sensorisch ermittelten Reifenabriebs mit dem theoretisch ermittelten Reifenabrieb mittels der dritten Verarbeitungsvorrichtung;
- Bestimmen eines ungleichmäßigen Reifenabriebs in Abhängigkeit des Vergleichens mittels der dritten Verarbeitungsvorrichtung.

Durch den erfindungsgemäßen Umstand, wonach das Verfahren durch die Schritte gekennzeichnet ist:
- Vergleichen des sensorisch ermittelten Reifenabriebs mit dem theoretisch ermittelten Reifenabrieb mittels der dritten Verarbeitungsvorrichtung;
- Bestimmen eines ungleichmäßigen Reifenabriebs in Abhängigkeit des Vergleichens mittels der dritten Verarbeitungsvorrichtung,

kann beispielsweise bei starken Unterschieden in der Bestimmung des Reifenabriebs mittels der Sensorik und mittels der zweiten
Verarbeitungsvorrichtung, auf einen ungleichmäßigen Reifenabrieb geschlossen werden.
Ferner kann in Abhängigkeit des Vergleichens eine gegenseitige Korrektur der Verfahren vorgenommen werden und der tatsächliche, korrekte Wert des Reifenabriebs bestimmt werden.

Weiter kann anhand des Vergleichs bestimmt werden, ob beispielsweise sensorisch stets ein zu hoher oder zu niedriger Reifenabrieb ermittelt wird.

Somit wird insgesamt ein verbessertes Verfahren bereitgestellt, mittels dem der Abrieb eines Reifens an einem Fahrzeug zuverlässiger und genauer bestimmt werden kann und mittels dem der Umstand erkannt werden kann, ob ein Reifen gegebenenfalls ungleichmäßig abgerieben worden ist.

Die Messung der Fahrdynamikparameter kann beispielsweise sekündlich erfolgen.

Die Bestimmung des theoretisch ermittelten Reifenabriebs erfolgt beispielsweise in Form eines Anteils Gramm pro abgeriebenen Kautschuk des Reifens für eine mit dem Reifen abgefahrene Strecke. Dies führt zu einem Grammwert abgeriebenen Reifenkautschuks. Anhand dieses Grammwerts des abgeriebenen Reifenkautschuks kann der Reifenabrieb bestimmt werden.

Bei dem Reifen handelt es sich beispielsweise um einen PKW-Reifen, um einen LKW-Reifen oder um einen Zweiradreifen.

Weitere vorteilhafte Ausgestaltungsformen der vorliegenden Erfindung sind Gegenstand der Unteransprüche.

Gemäß einer vorzugsweisen Ausgestaltungsform des erfindungsgemäßen Verfahrens wird in Abhängigkeit des Vergleichens des sensorisch ermittelten Reifenabriebs mit dem theoretisch ermittelten Reifenabrieb mittels der dritten Verarbeitungsvorrichtung eine Genauigkeit der Bestimmung des sensorisch ermittelten Reifenabriebs und/oder des theoretisch ermittelten Reifenabriebs bestimmt.

Dabei wird insbesondere ein Grad einer Genauigkeit der Bestimmung des sensorisch ermittelten Reifenabriebs und/oder des theoretisch ermittelten Reifenabriebs bestimmt.

Durch den erfindungsgemäßen Umstand, wonach in Abhängigkeit des Vergleichens des sensorisch ermittelten Reifenabriebs mit dem theoretisch ermittelten Reifenabrieb mittels der dritten Verarbeitungsvorrichtung eine Genauigkeit der Bestimmung des sensorisch ermittelten Reifenabriebs und/oder des theoretisch ermittelten Reifenabriebs bestimmt wird, kann eine Feststellung ermöglicht werden, ob beide Verfahren zur Bestimmung des Reifenabriebs korrekt und zuverlässig sind. Dazu wird ein Vergleich des radialbeschleunigungsbasierten Verfahrens mit dem modellbasierten Verfahren durchgeführt. Bei einer annähernd proportionalen Änderung der Werte, die beispielsweise mittels des radialbeschleunigungsbasierten Verfahrens und des modellbasierten Verfahrens erzeugt werden, ist die Feststellung der Korrektheit und Zuverlässigkeit beider Verfahren möglich.

Ferner kann ein Wahrscheinlichkeitswert, für die Richtigkeit eines tatsächlichen Reifenabriebs des Reifens ermöglicht werden. Ein ermittelter Wert für den Reifenabrieb, der von dem mit hoher Wahrscheinlichkeit zu erwartenden Wert abweicht, kann dadurch korrigiert werden.

Gemäß einer nächsten vorzugsweisen Ausgestaltungsform des erfindungsgemäßen Verfahrens weist die zweite Verarbeitungsvorrichtung eine künstliche Neuronale-Netz-Komponente auf. Dabei werden die mittels der zweiten Verarbeitungsvorrichtung durchgeführten Schritte mittels der künstlichen Neuronale-Netz-Komponente durchgeführt.

Gemäß einer nächsten vorzugsweisen Ausgestaltungsform des erfindungsgemäßen Verfahrens handelt es sich bei der künstlichen Neuronalen-Netz-Komponente um eine solche künstliche Neuronale-Netz-Komponente, die angelernt ist, einem Satz von Fahrdynamikparametern eine Reibungsenergie zuzuordnen.

Gemäß einer nächsten vorzugsweisen Ausgestaltungsform des erfindungsgemäßen Verfahrens handelt es sich bei der künstlichen Neuronale-Netz-Komponente um eine solche künstliche Neuronale-Netz-Komponente, die mittels simulierter Fahrstrecken, simulierter Fahrdynamikparametern und/oder simulierter Daten zur Reibungsenergie angelernt worden ist, einem Satz von Fahrdynamikparametern eine Reibungsenergie zuzuordnen.

Gemäß einer nächsten vorzugsweisen Ausgestaltungsform des erfindungsgemäßen Verfahrens handelt es sich bei den Fahrdynamikparametern um eine longitudinale Beschleunigung des Fahrzeugs, um eine vertikale Beschleunigung des Fahrzeugs, um eine Geschwindigkeit des Fahrzeugs, um eine Gierrate des Fahrzeugs oder um gefahrene Höhenunterschiede des Fahrzeugs.

Durch den erfindungsgemäßen Umstand, wonach es sich bei den Fahrdynamikparametern um eine longitudinale Beschleunigung des Fahrzeugs, um eine vertikale Beschleunigung des Fahrzeugs, um eine Geschwindigkeit des Fahrzeugs, um eine Gierrate des Fahrzeugs oder um gefahrene Höhenunterschiede des Fahrzeugs handelt, können solche Daten mittels der künstlichen Neuronalen-Netz-Komponente berücksichtigt werden, mittels derer reale Reibungswerte ermittelt werden können, die an überbewachten Fahrzeugen ermittelt werden können.

Gemäß einer nächsten vorzugsweisen Ausgestaltungsform des erfindungsgemäßen Verfahrens wird ein zeitlicher Verlauf einer Gruppe von Werten des sensorisch ermittelten Reifenabriebs des Reifens mit einer Gruppe von Werten des theoretisch ermittelten Reifenabriebs des Reifens mittels der dritten Verarbeitungsvorrichtung verglichen. Dabei wird insbesondere in Abhängigkeit dieses Vergleichs ein unregelmäßiger Abrieb des Reifens bestimmt. Dabei handelt es sich insbesondere um einen Wert oder um einen Grad eines unregelmäßigen Abriebs des Reifens.

Durch den erfindungsgemäßen Umstand, wonach ein zeitlicher Verlauf einer Gruppe von Werten des sensorisch ermittelten Reifenabriebs des Reifens mit einer Gruppe von Werten des theoretisch ermittelten Reifenabrieb des Reifens mittels der dritten Verarbeitungsvorrichtung verglichen wird und insbesondere in Abhängigkeit dieses Vergleiches ein ungleichmäßiger Abrieb des Reifens bestimmt wird, kann beispielsweise eine Ungenauigkeit der Sensorik bestimmt und ermittelt werden.

Gemäß einer nächsten vorzugsweisen Ausgestaltungsform des erfindungsgemäßen Verfahrens wird der zeitliche Verlauf einer Gruppe von Werten des sensorisch ermittelten Reifenabriebs des Reifens mit einer Gruppe von Werten des theoretisch ermittelten Reifenabriebs des Reifens mittels der dritten Verarbeitungsvorrichtung monatlich verglichen.

Durch den erfindungsgemäßen Umstand, wonach der zeitliche Verlauf einer Gruppe von Werten des sensorisch ermittelten Reifenabriebs des Reifens mit einer Gruppe von Werten des theoretisch ermittelten Reifenabriebs des Reifens mittels der dritten Verarbeitungsvorrichtung monatlich verglichen wird, kann eine permanente und hochgenaue Überwachung des Reifenabriebs sichergestellt werden. Somit kann beispielsweise bei der Kontrolle einer Mehrzahl von Fahrzeugen, beispielsweise in einem Flottenmanagement, hochgenau, zuverlässig, rechtzeitig aber auch nicht zu früh, also anlassbezogen, bestimmt werden, ob ein bestimmter Reifenabrieb vorliegt.

Weitere Merkmale, Vorteile und Einzelheiten, auf die die Erfindung in ihrem Umfang aber nicht beschränkt ist, werden nun anhand der Zeichnung näher beschrieben.

Es zeigt:

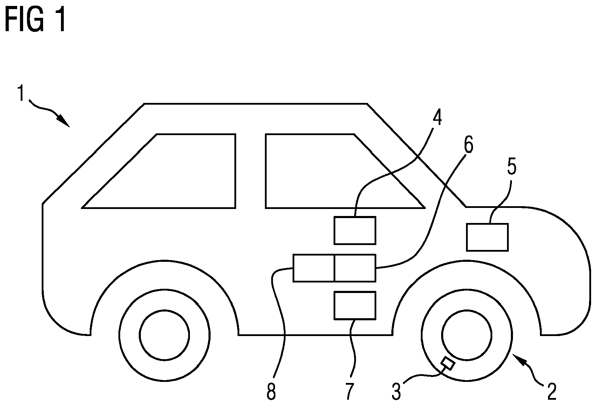

Fig. 1: Eine schematische Darstellung von Vorrichtungen zur Durchführung des erfindungsgemäßen Verfahrens.

In der Figur 1 ist ein Fahrzeug 1 dargestellt. Das Fahrzeug 1 weist einen Reifen 2 auf. Der Reifen 2 weist einen Radialbeschleunigungssensor 3 auf. Der Radialbeschleunigungssensor 3 ist zur Erfassung einer Radialbeschleunigung des Reifens 2 vorgesehen.

Eine erste Verarbeitungsvorrichtung 4 ist gemäß der in der Figur 1 dargestellten Ausführungsform an dem Fahrzeug 1 angeordnet. Die erste Verarbeitungsvorrichtung 4 ist zur Verarbeitung der mittels des Radialbeschleunigungssensors 3 erfassten Radialbeschleunigung vorgesehen. Mittels der ersten Verarbeitungsvorrichtung 4 kann in Abhängigkeit der Radialbeschleunigung eine Profiltiefe des Reifens 2 mittels der ersten Verarbeitungsvorrichtung 4 bestimmt werden.

An dem Fahrzeug 1 ist ferner eine Sensorik 5 zur Messung von Fahrdynamikparametern angeordnet.

Ferner ist gemäß der in der Figur 1 dargestellten Ausführungsform eine zweite Verarbeitungsvorrichtung 6 an dem Fahrzeug 1 angeordnet. Die zweite Verarbeitungsvorrichtung 6 ist eingerichtet, den Fahrdynamikparametern Reibungsenergien zuzuordnen. Ferner ist gemäß der in der Figur 1 dargestellten Ausführungsform der Erfindung eine dritte Verarbeitungsvorrichtung 7 an dem Fahrzeug 1 angeordnet. Mittels der dritten Verarbeitungsvorrichtung 7 können Reibungsenergien für gemessene Fahrtstrecken zu einer Gesamtreibungsenergie zusammengefasst werden. Ferner kann mittels der dritten Verarbeitungsvorrichtung 7 in Abhängigkeit der Gesamtreibungsenergie ein theoretisch ermittelter Reifenabrieb des Reifens 2 bestimmt werden.

Erfindungsgemäß kann der sensorisch ermittelte Reifenabrieb des Reifens 2 mit dem theoretisch ermittelten Reifenabrieb de Reifens 2 mittels der dritten Verarbeitungsvorrichtung 7 verglichen werden und in Abhängigkeit des Vergleichens mittels der dritten Verarbeitungsvorrichtung 7 kann ein ungleichmäßiger Reifenabrieb des Reifens 2 bestimmt werden.

Gemäß der in der Figur 1 dargestellten Ausführungsform weist die zweite Verarbeitungsvorrichtung 6 eine künstliche Neuronale-Netz-Komponente 8 auf. Dabei können die mittels der zweiten Verarbeitungsvorrichtung 6 durchgeführten Schritte mittels der künstlichen Neuronalen-Netz-Komponente 8 durchgeführt werden.

### Bezugszeichenliste

- 1: Fahrzeug
- 2: Reifen
- 3: Radialbeschleunigungssensor
- 4: Erste Verarbeitungsvorrichtung
- 5: Sensorik
- 6: Zweite Verarbeitungsvorrichtung
- 7: Dritte Verarbeitungsvorrichtung
- 8: Künstliche Neuronale-Netz-Komponente

## Patentansprüche

1. Verfahren zur Bestimmung eines Abriebs eines Reifens (2) an einem Fahrzeug (1), aufweisend die folgenden Schritte:
- Bereitstellen eines Reifens, wobei der Reifen einen Radialbeschleunigungssensor (3) aufweist, wobei der Radialbeschleunigungssensor (3) zur Erfassung einer Radialbeschleunigung des Reifens vorgesehen ist;
- Erfassen einer Radialbeschleunigung des Reifens (2) mittels des Radialbeschleunigungssensors (3);
- Bereitstellen einer ersten Verarbeitungsvorrichtung (4), wobei die erste Verarbeitungsvorrichtung zur Verarbeitung der mittels des Radialbeschleunigungssensors (3) erfassten Radialbeschleunigung vorgesehen ist;
- Bestimmen einer Profiltiefe des Reifens (2) mittels der ersten Verarbeitungsvorrichtung (4) in Abhängigkeit der Radialbeschleunigung;
- Bestimmen eines sensorisch ermittelten Reifenabriebs mittels der ersten Verarbeitungsvorrichtung (4) in Abhängigkeit der Profiltiefe;
- Bereitstellen einer Sensorik (5) am Fahrzeug (1) zur Messung von Fahrdynamikparametern zu jeweiligen Messzeitpunkten;
- Bereitstellen einer zweiten Verarbeitungsvorrichtung (6), wobei den Fahrdynamikparametern Reibungsenergien mittels der zweiten Verarbeitungsvorrichtung (6) zugeordnet werden;
- Zuordnen der Reibungsenergien zu den jeweiligen Messzeitpunkten mittels der zweiten Verarbeitungsvorrichtung (6);
- Bereitstellen einer dritten Verarbeitungsvorrichtung (7) und Zusammenfassen von Reibungsenergien für gemessene Fahrtstrecken zu einer Gesamtreibungsenergie mittels der dritten Verarbeitungsvorrichtung (7);
- Bestimmen eines theoretisch ermittelten Reifenabriebs mittels der dritten Verarbeitungsvorrichtung (7) in Abhängigkeit der Gesamtreibungsenergie;
- **gekennzeichnet durch** die weiteren Schritte:
- Vergleichen des sensorisch ermittelten Reifenabriebs mit dem theoretisch ermittelten Reifenabrieb mittels der dritten Verarbeitungsvorrichtung (7);
- Bestimmen eines ungleichmäßigen Reifenabriebs in Abhängigkeit des Vergleichens mittels der dritten Verarbeitungsvorrichtung (7).

2. Verfahren nach Anspruch 1, **dadurch gekennzeichnet, dass** in Abhängigkeit des Vergleichens des sensorisch ermittelten Reifenabriebs mit dem theoretisch ermittelten Reifenabrieb mittels der dritten Verarbeitungsvorrichtung (7) eine Genauigkeit der Bestimmung des sensorisch ermittelten Reifenabriebs und/oder des theoretisch ermittelten Reifenabriebs bestimmt wird.

3. Verfahren nach einem der Ansprüche 1 oder 2, **dadurch gekennzeichnet, dass** die zweite Verarbeitungsvorrichtung (6) eine künstliche Neuronale-Netz-Komponente (8) aufweist, wobei die mittels der zweiten Verarbeitungsvorrichtung (6) durchgeführten Schritte mittels der künstlichen Neuronalen-Netz-Komponente (8) durchgeführt werden.

4. Verfahren nach dem vorhergehenden Anspruch, **dadurch gekennzeichnet, dass** es sich bei der künstlichen Neuronalen-Netz-Komponente (8) um eine solche künstliche Neuronale-Netz-Komponente (8) handelt, die angelernt ist, einem Satz von Fahrdynamikparametern eine Reibungsenergie zuzuordnen.

5. Verfahren nach dem vorhergehenden Anspruch, **dadurch gekennzeichnet, dass** es sich bei der künstlichen Neuronalen-Netz-Komponente (8) um eine solche künstliche Neuronale-Netz-Komponente (8) handelt, die mittels simulierter Fahrstrecken, simulierter Fahrdynamikparametern und/oder simulierter Daten zur Reibungsenergie angelernt worden ist, einem Satz von Fahrdynamikparametern eine Reibungsenergie zuzuordnen.

6. Verfahren nach einem der vorhergehenden Ansprüche, **dadurch gekennzeichnet, dass** es sich bei den Fahrdynamikparametern um eine longitudinale Beschleunigung des Fahrzeugs (1), um eine vertikale Beschleunigung des Fahrzeugs (1), um eine Geschwindigkeit des Fahrzeugs (1), um eine Gierrate des Fahrzeugs (1) oder um gefahrene Höhenunterschiede des Fahrzeugs (1) handelt.

7. Verfahren nach einem der vorhergehenden Ansprüche, **dadurch gekennzeichnet, dass** ein zeitlicher Verlauf einer Gruppe von Werten des sensorisch ermittelten Reifenabriebs des Reifens mit einer Gruppe von Werten des theoretisch ermittelten Reifenabriebs mittels der dritten Verarbeitungsvorrichtung (7) verglichen wird und insbesondere in Abhängigkeit dieses Vergleichs ein ungleichmäßiger Abrieb des Reifens (2) bestimmt wird.

8. Verfahren nach dem vorhergehenden Anspruch, **dadurch gekennzeichnet, dass** der zeitliche Verlauf einer Gruppe von Werten des sensorisch ermittelten Reifenabriebs des Reifens (2) mit einer Gruppe von Werten des theoretisch ermittelten Reifenabriebs mittels der dritten Verarbeitungsvorrichtung (7) monatlich verglichen wird.

## Claims

1. Method for determining wear of a tyre (2) on a vehicle (1), comprising the following steps:
- providing a tyre, the tyre having a radial acceleration sensor (3), the radial acceleration sensor (3) being intended for recording a radial acceleration of the tyre;
- recording a radial acceleration of the tyre (2) by means of the radial acceleration sensor (3);
- providing a first processing device (4), the first processing device being intended for processing the radial acceleration recorded by means of the radial acceleration sensor (3);
- determining a profile depth of the tyre (2) by means of the first processing device (4) in dependence on the radial acceleration;
- determining tyre wear, detected by sensors, by means of the first processing device (4) in dependence on the profile depth;
- providing a sensor system (5) on the vehicle (1) for measuring parameters of driving dynamics at respective measuring times;
- providing a second processing device (6), the parameters of driving dynamics being assigned friction energies by means of the second processing device (6);
- assigning the friction energies to the respective measuring times by means of the second processing device (6);
- providing a third processing device (7) and combining friction energies for measured routes to form an overall friction energy by means of the third processing device (7):
- determining theoretically obtained tyre wear by means of the third processing device (7) in dependence on the overall friction energy;
- **characterized by** the further steps of:
- comparing the tyre wear detected by sensors with the theoretically obtained tyre wear by means of the third processing device (7);
- determining uneven tyre wear in dependence on the comparison by means of the third processing device (7).

2. Method according to Claim 1, **characterized in that** a degree of accuracy for determining the tyre wear detected by sensors and/or the theoretically obtained tyre wear is determined in dependence on the comparison of the tyre wear determined by sensors with the theoretically obtained tyre wear by means of the third processing device (7).

3. Method according to either of Claims 1 and 2, **characterized in that** the second processing device (6) has an artificial neural network component (8), the steps carried out by means of the second processing device (6) being carried out by means of the artificial neural network component (8).

4. Method according to the preceding claim, **characterized in that** the artificial neural network component (8) is an artificial neural network component (8) of the kind that is trained to assign a friction energy to a set of parameters of driving dynam ics.

5. Method according to the preceding claim, **characterized in that** the artificial neural network component (8) is an artificial neural network component (8) of the kind that has been trained by means of simulated routes, simulated parameters of driving dynamics and/or simulated data relating to friction energy to assign a friction energy to a set of parameters of driving dynamics.

6. Method according to any of the preceding claims, **characterized in that** the parameters of driving dynamics are a longitudinal acceleration of the vehicle (1), a vertical acceleration of the vehicle (1), a speed of the vehicle (1), a yaw rate of the vehicle (1) or differences in altitude driven by the vehicle (1).

7. Method according to any of the preceding claims, **characterized in that** a time progression of a group of values for the tyre wear of the tyre determined by sensors is compared with a group of values for the theoretically obtained tyre wear by means of the third processing device (7) and uneven wear of the tyre (2) is determined in particular in dependence on this comparison.

8. Method according to the preceding claim, **characterized in that** the time progression of a group of values for the tyre wear of the tyre (2) determined by sensors is compared with a group of values for the theoretically obtained tyre wear by means of the third processing device (7) every month.

## Revendications

1. Procédé permettant de déterminer l'abrasion d'un pneu (2) sur un véhicule (1), présentant les étapes suivantes consistant à :
- fournir un pneu, le pneu présentant un capteur d'accélération radiale (3), le capteur d'accélération radiale (3) étant prévu pour détecter une accélération radiale du pneu ;
- détecter une accélération radiale du pneu (2) au moyen du capteur d'accélération radiale (3) ;
- fournir un premier dispositif de traitement (4), le premier dispositif de traitement étant prévu pour traiter l'accélération radiale détectée au moyen du capteur d'accélération radiale (3) ;
- déterminer une profondeur de sculpture du pneu (2) au moyen du premier dispositif de traitement (4) en fonction de l'accélération radiale ;
- déterminer une usure de pneu établie par capteur au moyen du premier dispositif de traitement (4) en fonction de la profondeur de sculpture ;
- fournir un système de capteurs (5) sur le véhicule (1) pour mesurer des paramètres de dynamique de conduite à des instants de mesure respectifs ;
- fournir un deuxième dispositif de traitement (6), dans lequel des énergies de frottement sont associées aux paramètres de dynamique de conduite au moyen du deuxième dispositif de traitement (6) ;
- associer les énergies de frottement aux instants de mesure respectifs au moyen du deuxième dispositif de traitement (6) ;
- fournir un troisième dispositif de traitement (7) et regrouper des énergies de frottement pour des trajets mesurés en une énergie de frottement totale au moyen du troisième dispositif de traitement (7) ;
- déterminer une usure de pneu établie de manière théorique au moyen du troisième dispositif de traitement (7) en fonction de l'énergie de frottement totale ;
- **caractérisé par** les étapes supplémentaires consistant à :
- comparer l'usure de pneu établie par capteur avec l'usure de pneu établie de manière théorique au moyen du troisième dispositif de traitement (7) ;
- déterminer une usure de pneu irrégulière en fonction de la comparaison au moyen du troisième dispositif de traitement (7).

2. Procédé selon la revendication 1, **caractérisé en ce qu'**en fonction de la comparaison de l'usure de pneu établie par capteur avec l'usure de pneu établie de manière théorique au moyen du troisième dispositif de traitement (7), une justesse de la détermination de l'usure de pneu établie par capteur et/ou de l'usure établie de manière théorique est déterminée.

3. Procédé selon l'une quelconque des revendications 1 ou 2, **caractérisé en ce que** le deuxième dispositif de traitement (6) présente une composante de réseau neuronal artificielle (8), dans lequel les étapes exécutées au moyen du deuxième dispositif de traitement (6) sont exécutées au moyen de la composante de réseau neuronal artificielle (8).

4. Procédé selon la revendication précédente, **caractérisé en ce que** la composante de réseau neuronal artificielle (8) est une composante de réseau neuronal artificielle (8) qui a été entraînée pour associer une énergie de frottement à un ensemble de paramètres de dynamique de conduite.

5. Procédé selon la revendication précédente, **caractérisé en ce que** la composante de réseau neuronal artificielle (8) est une composante de réseau neuronal artificielle (8) qui a été entraînée au moyen de trajets simulés, de paramètres de conduite simulés et/ou de données simulées concernant l'énergie de frottement pour associer une énergie de frottement à un ensemble de paramètres de dynamique de conduite.

6. Procédé selon l'une quelconque des revendications précédentes, **caractérisé en ce que** les paramètres de dynamique de conduite sont une accélération longitudinale du véhicule (1), une accélération verticale du véhicule (1), une vitesse du véhicule (1), un taux de lacet du véhicule (1) ou des différences de niveau parcourues par le véhicule (1).

7. Procédé selon l'une quelconque des revendications précédentes, **caractérisé en ce qu'**une courbe dans le temps d'un groupe de valeurs de l'usure de pneu établie par capteur est comparée avec un groupe de valeurs de l'usure de pneu établie de manière théorique au moyen du troisième dispositif de traitement (7), et une usure irrégulière du pneu (2) est déterminée en particulier en fonction de cette comparaison.

8. Procédé selon la revendication précédente, **caractérisé en ce que** la courbe dans le temps d'un groupe de valeurs de l'usure de pneu établie par capteurs du pneu (2) est comparée mensuellement avec un groupe de valeurs de l'usure de pneu établie de manière théorique au moyen du troisième dispositif de traitement (7).
